# EUROPEAN PATENT APPLICATION

(11) **EP 3 567 261 A1**
(43) Date of publication of application: **13.11.2019**
(21) Application number: 19168338.2
(22) Date of filing: 10.04.2019
(51) Int. Cl.: F04F 5/16, F04F 5/46, F02C 7/00

(54) **FLUID EJECTOR**

(30) Priority: 10.05.2018 GB 201807614
(71) Applicant: Rolls-Royce plc, London SW1E 6AT (GB)
(72) Inventor: Scothern, David, Derby, Derbyshire DE24 8BJ (GB)
(74) Representative: Rolls-Royce plc

(57) **Abstract**

A fluid ejector (56) having: a diffuser duct (76) for mixing of a first gas stream (98a) with a second gas stream (102a) having faster velocity than the first gas stream (98a), wherein the diffuser duct (76) extends along an axial direction (64) from a first end (70) to a second end (72); one or more inlets (96a) for the first gas stream (98a) at the first end (70) of the diffuser duct (76); and a nozzle arrangement (104,106) for providing the second gas stream (102a), wherein the nozzle arrangement includes a plurality of nozzles (104,106) arranged concentrically around the axial direction (64). In cross-section perpendicular to the axial direction (64), the diffuser duct (76) is defined between an outer wall (66) extending around the axial direction (64). A concentric inner wall (76) may also be provided, thereby splitting the diffuser duct (76) into a first central diffuser duct (78) and a second annular diffuser duct (76).

## Description

### TECHNICAL FIELD

The present disclosure relates to a fluid ejector, a gas turbine engine including the fluid ejector, and a fluid ejector system. In particular, but not exclusively, the present disclosure relates to a fluid ejector for providing pressurised air from a gas turbine engine of an aircraft, to a passenger cabin.

### BACKGROUND

Providing pressurised air to the passenger cabin of an aircraft uses fuel, and reduces engine efficiency. For aircraft having gas turbine engines, air can be provided from the compressor stages of the engine to the passenger cabin using a cabin bleed system.

Conventionally, a cabin bleed system using engine air takes a low pressure source of air from a first compressor stage, and a high pressure source from a second, higher pressure, compressor stage. At different stages in the operational cycle of an aircraft, the pressure of the air provided from the low pressure source and high pressure source can vary.

It is desirable to select the low pressure source such that it can deliver air at the required pressure over the entire operation of the aircraft. However, in certain situations, the air pressure from the low pressure source in the engine may be reduced such that it is not able to provide adequate air pressure to the cabin. One example of such a situation may be, for example, at the end of a long flight where the majority of the fuel has been used, but the aircraft is cruising at high altitude, with a low power generated by the engine.

In these situations, the air from the high pressure source is used. However, the air from the high pressure source is typically at high temperatures and requires cooling. Air coolers add weight, and may also be bulky, making it hard to accommodate in the engine. Depending on where they are placed, air coolers are also potentially aerodynamically unfavourable. Furthermore, taking air from a high pressure compressor stage reduces the efficiency of the engine compared to if air is taken from a lower pressure compressor stage, as more work has been done on the air by the engine.

In some examples, a cabin bleed ejector can be used to increase the pressure of air taken from the low pressure supply. An ejector is a device which uses a high velocity flow of feed air to accelerate and pressurise a body of lower pressure air. An ejector takes a small high-pressure air feed, accelerates it to high velocity, and injects it into a slow-moving body of low pressure air. This accelerates the low pressure air and allows its pressure to be raised.

A conventional ejector has a length to diameter ratio of about 6:1 to achieve full mixing of the air flows, and acceleration of the lower pressure air supply. For a cabin air duct which may be 125mm diameter, such a large device can be difficult to accommodate in an engine.

### SUMMARY

According to a first aspect there is provided a fluid ejector having: a diffuser duct for mixing of a first gas stream with a second gas stream having faster velocity than the first gas stream, wherein the diffuser duct extends along an axial direction, and wherein, in cross-section perpendicular to the axial direction, the diffuser duct is defined between a first wall extending around the axial direction, and a second wall extending around the axial direction, radially within the first wall.

The use of an annular passage in the diffuser makes the ejector more convenient to integrate into an engine, as further components can be provided in the centre of the annular duct.

The diffuser duct may be a first diffuser duct. The fluid injector may include a second diffuser duct extending along the axial direction and extending within the second wall or outside the first wall. The second diffuser duct may be for mixing a third gas stream and a fourth gas stream, the third gas stream from the same source as the first gas stream and the fourth gas stream from the same source as the second gas stream.

By arranging two diffuser ducts concentrically, the length of diffuser duct required for the two flows to mix is significantly reduced compared to a single duct, whilst the diameter of the device is substantially unchanged. Therefore, the device is made more compact, and is easier to integrate into a gas turbine engine.

In cross-section perpendicular to the axial direction, the second diffuser duct may comprise a continuous space bounded by the wall. Alternatively, in cross-section perpendicular to the axial direction, the second diffuser may be defined between a perimeter wall extending around the axial direction and the first wall. The first wall may be radially within the perimeter wall.

The first and second diffuser ducts may be contiguous in the radial direction, such that first wall forms an inner surface or outer surface of the second diffuser duct.

The fluid ejector may include one or more further diffuser ducts. Each further diffuser duct may extend along the axial direction and may be arranged inside or outside the first and second diffuser ducts. Each further diffuser duct may be for mixing a gas stream from the same source as the first gas stream and a gas stream from the same source as the second gas stream.

The ejector may comprise a passage divided into two or more diffuser ducts in a radial direction. A ratio between the length of a length of the passage along the axial direction, and a diameter of the passage in the radial direction may be no more than 6:1. The ratio between the length of the passage and a diameter of the passage may be no more than 4.5:1.

The or each diffuser duct may extend from a first end to a second end, along the axial direction. The first and second gas streams may be provided at or near the first end, and may travel along the axial direction such that a mixture of the first and second gas streams is provided at the second end of the or each duct. A radial width of the diffuser duct, or at least one of the diffuser ducts, may decrease along the axial length from the first end to a constriction, and may widen along the axial length from the constriction to the second end, such that the diffuser duct to the at least one of the or each diffuser ducts forms a Venturi tube.

The or each diffuser duct may include one or more inlets for the first gas stream, and one or more inlets for the second gas stream. The one or more inlets for the second gas stream may comprise one or more separate nozzles arranged around the or each diffuser duct, at or near the first end. The one or more inlets for the second gas stream may comprise an annular nozzle provided at or near the first end of the or each diffuser duct.

The fluid ejector may comprise a cabin bleed ejector for providing air from a compressor stage of a gas turbine engine of an aircraft to a passenger cabin of the aircraft.

The ejector is of short length, and so easy to fit into a gas turbine engine. Furthermore, because the ejector is able to accelerate low pressure gas flows, the low pressure supply for the engine may be taken from a lower pressure stage of the compressor, providing improvements in engine efficiency.

The ejector may be arranged to take a first gas stream of air from a first compressor stage of a gas turbine engine, and the second stream of air from a second compressor stage. The second compressor stage may operate at higher pressure than the first compressor stage.

According to a second aspect, there is provided a gas turbine engine for an aircraft comprising: an engine core comprising a turbine, a compressor, and a core shaft connecting the turbine to the compressor; a fan located upstream of the engine core, the fan comprising a plurality of fan blades; and the cabin air bleed ejector discussed in as part of the first aspect, arranged to provide air form the compressor to a cabin of an aircraft on which the engine is mounted.

The use of an annular passage in the diffuser duct makes the ejector more convenient to integrate into an engine, as further components can be provided in the centre of the annular duct. Furthermore, where the ejector includes two or more concentric diffuser ducts, the ejector is of short length, and so easy to fit into a gas turbine engine. Also, because the ejector is able to accelerate low pressure gas flows, the low pressure supply for the engine may be taken from a lower pressure stage of the compressor, providing improvements in engine efficiency.

The turbine may be a first turbine, the compressor may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft. The first gas stream of the fluid ejector may be taken from the first compressor or the second compressor, and the second gas stream may be taken from the second compressor.

The gas turbine engine may include: a gearbox that receives an input from the core shaft and outputs drive to the fan so as to drive the fan at a lower rotational speed than the core shaft.

According to a third aspect, there is provided: a fluid ejector having: a passage extending along an axial direction from a first end to a second end, opposite the first, the diffuser duct arranged to mix a first gas stream with a second gas stream having faster velocity than the first gas stream, and provide the mixture at the second end; one or more inlets for the first gas stream at the first end of the diffuser duct; and a nozzle arrangement for providing the second gas stream at the second end of the diffuser duct, wherein the nozzle arrangement includes a plurality of nozzles arranged concentrically around the axial direction.

The use of a concentric arrangement of nozzles for the second gas stream means that the length of diffuser duct required for the two flows to mix is significantly reduced compared to a single nozzle, whilst the diameter of the device is substantially unchanged. Therefore, the device is made more compact, and is easier to integrate into a gas turbine engine.

The nozzle arrangement may include: a cylindrical nozzle arranged along the axial direction; and an annular nozzle or arrangement of nozzles arranged around the cylindrical nozzle.

The passage may include an inner wall extending within the passage. The inner wall may be annular around the axial direction such that the passage is split into a cylindrical duct, and an annular duct around the cylindrical duct. The nozzle arrangement may be arranged to provide the second gas stream into the cylindrical duct and the annular duct. For example, the cylindrical nozzle may be at a radial position inside the cylindrical duct and the annular nozzle at a radial position inside the annular duct.

Alternatively, the passage may define a single duct. This arrangement has particular benefit when using low pressure sources for the first gas stream.

According to a fourth aspect, there is provided a fluid ejector system having two or more fluid ejectors, wherein the fluid ejectors are substantially concentric and are contiguous in the radial direction, and wherein at least one of the ejectors is substantially annular in shape.

By arranging two diffuser ducts concentrically, the length of diffuser duct required for the two flows to mix is significantly reduced, whilst the diameter of the device is unchanged. Therefore, the device is made more compact, and is easier to integrate into a gas turbine engine.

According to a fifth aspect, there is provided a method of accelerating a first gas flow using a second gas flow having higher velocity than the first gas flow, the method comprising: mixing the first and second gas flow in a fluid ejector having a substantially annular diffuser duct.

The use of an annular passage in the diffuser duct makes the ejector more convenient to integrate into an engine, as further components can be provided in the centre of the annular duct. Furthermore, where the ejector includes two or more concentric diffuser ducts, the ejector is of short length, and so easy to fit into a gas turbine engine. Also, because the ejector is able to accelerate low pressure gas flows, the low pressure supply for the engine may be taken from a lower pressure stage of the compressor, providing improvements in engine efficiency.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for engines having propulsive fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)2). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C. As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is a schematic view of a cabin air bleed system;
**Figure 5A** is a schematic, side on sectional view of the ejector of the cabin air bleed system of Figure 4;
**Figure 5B** is a schematic, front on sectional view of the ejector of Figure 5A;
**Figure 6** is a schematic sectional perspective view of a diffuser of an alternative ejector;
**Figure 7A** is a schematic, side on sectional view of an alternative ejector for the cabin air bleed system of Figure 4; and
**Figure 7B** is a schematic, side on sectional view of the alternative ejector of Figure 7A.

### DETAILED DESCRIPTION

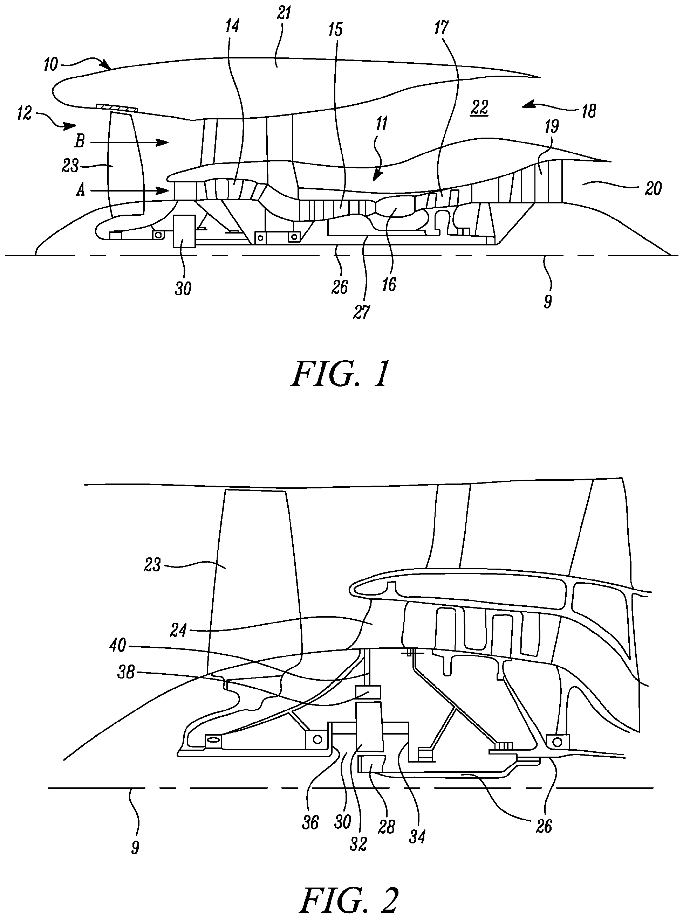

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

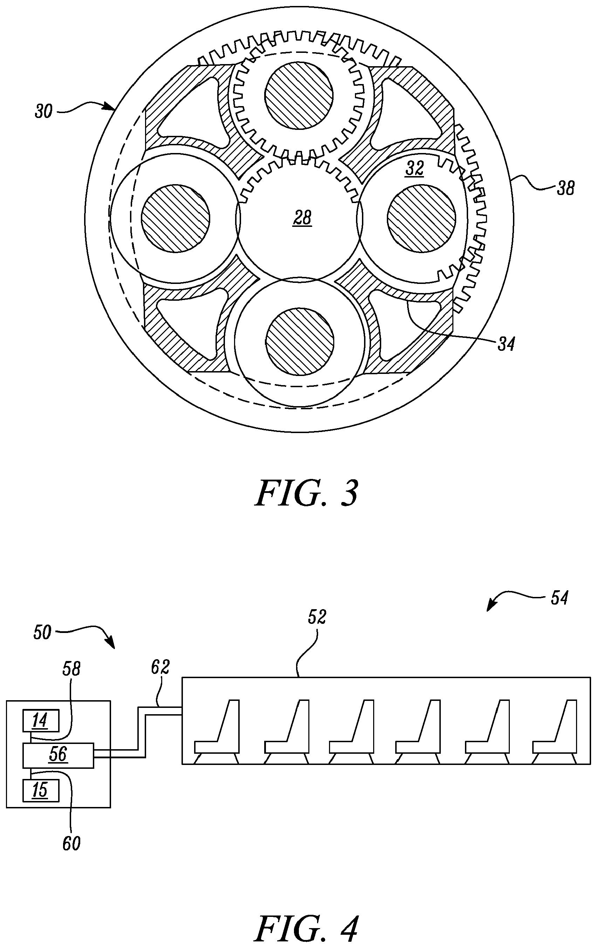

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the

Figure 1 view). The axial, radial and circumferential directions are mutually perpendicular.

Figure 4 schematically illustrates a system 50 for providing pressurised air into a passenger cabin 52 of an aircraft 54. A gas turbine engine 10, as discussed above, is mounted on the aircraft 54, from the wing or fuselage.

The gas turbine engine 10 includes a cabin bleed ejector 56, which takes a low-pressure air supply 58 from the low pressure compressor 14 of the engine 10, and a high pressure air supply 60 from the high pressure compressor 15. As will be described in more detail below, the ejector 56 uses the high pressure supply 60 to increase the pressure of the low pressure supply 58. Air is then provided from the ejector 56, into the cabin 54, through cabin air ducting 62.

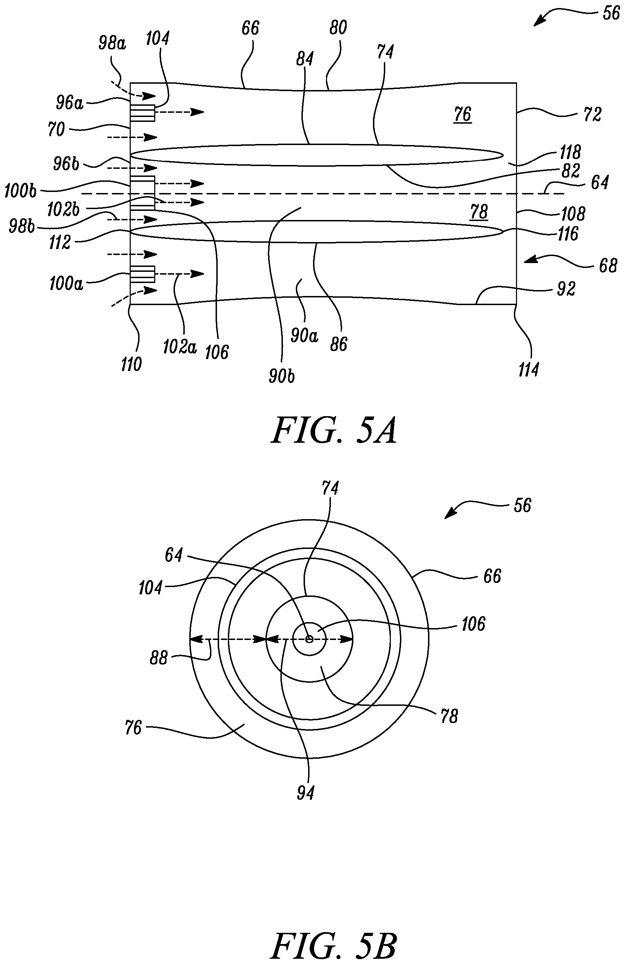

Figures 5A and 5B illustrate a first example embodiment of the ejector 56 in more detail. The ejector 56 extends along an ejector axis 64. Figure 5A illustrates the ejector 56 in cross section along the axial direction 64, whilst Figure 5B illustrates the ejector 56 in cross section perpendicular to the axis 64.

The ejector 56 includes an outer wall 66. The outer wall 66 is annular and extends along and around the ejector axis 64, defining a passage 68 extending from a first end 70 of the ejector 56 to a second end 72. The first end 70 of the passage 68 is closed by an end wall (not shown), or the like, whilst the second end 72 is open at an opening 108.

An inner wall 74 is provided within the passage 68. The inner wall 74 is also is annular and extends along and around the ejector axis 64. The inner wall 74 splits the passage 68 into a first diffuser duct 76, and a second diffuser duct 78. The first diffuser duct 76 is annular in cross-section perpendicular to the ejector axis 64, whilst the second diffuser duct 78 is cylindrical, extending through the centre of the first diffused duct 76. Thus, the diffuser ducts 76, 78, separated by the inner wall 74, are concentric and contiguous.

As best shown in Figure 5A, along the length of the ejector 56 from the first end 70, the outer wall 66 tapers inwards towards the ejector axis 64 until it reaches a narrow point or waist 80. The outer wall 66 then tapers outwards from the axis 64 after the waist 80. As such, the diameter of the passage 68, measured from the inner surface 92 of the outer wall 66, reduces towards the waist 80 from either the first end 70 or the second end 72 of the ejector 56.

The inner wall 74 includes an inner surface 82 facing radially inwards, and an outer surface 84 facing radially outwards. As also best shown in Figure 5A, along the axial length of the ejector 56 from the first end 70, the thickness of inner wall varies, so that a radial spacing between the inner and outer surfaces 82, 84 varies. Along the axial direction 64, the spacing between the inner and outer surfaces 82, 84 increases from the first end 70 to a maximum spacing 86, and then reduces towards the second end 72 of the ejector 56.

The annular diffuser duct 76 has a radial width 88 defined between the outer surface 84 of the inner wall 74, and an inner surface 92 of the outer wall 66. Along the axial direction 64, the waist 80 in the outer wall 66 aligns with the maximum spacing 86 between the inner and outer surface 82, 84 of the inner wall 74. Therefore, along the axial direction 64 from the first end 70, the radial width 88 of the annular duct 76 narrows to a constriction 90a, and then widens to the second end 72. As such, the annular duct 76 forms a Venturi tube for gas passing through it.

Similarly, the cylindrical duct 78 has a radial width 94 defined by the spacing of the inner surface 82 of the inner wall 74 from the axis 64. Therefore, the radial width 94 of the cylindrical duct 78 also narrows, from the first end 72 to a constriction 90b along the axial length of the ejector 56, before widening towards the second end 72. Thus the cylindrical duct 78 also forms a Venturi tube for gas passing through it.

As best shown in Figure 5A, at the first end 70 of the ejector 56, a first end 110 of the outer wall 66 is flush with a first end 112 of the inner wall 74. However, at the second end 72 of the ejector 56, a second end 114 of the outer wall 66 extends beyond a second end 116 of the inner wall 74. As such, the cylindrical diffuser duct 78 has an opening 118 that opens into the passage 68, before the second end 72 of the passage 68.

Each diffuser duct 76, 78 includes respective inlets 96a, 96b for a low pressure stream of gas 98a, 98b, such as air from a low pressure compressor stage 14 of the engine 10. In the example shown, the inlets 96a, 96b are in the form of openings provided in the wall at the first end 70 of the ejector 56.

Each diffuser duct 76, 78 also includes an inlet 100a, 100b for a high pressure stream of gas 102a, 102b, such as air from a high pressure compressor stage 15 of the gas turbine engine 10.

The inlets 100a, 100b for the high pressure stream 102a, 102b are in the form of nozzles that include a narrow (relative to the conduit feeding the stream) opening at the point of discharge. In the annular diffuser duct 76, the inlet is formed by an annular nozzle 104 extending around the first end 70 of the ejector 56. In the cylindrical diffuser duct 78, the inlet is in the form of a simple cylindrical nozzle 106 at the first end 70 of the ejector 56.

In use, air from the high pressure compressor 15 is provided in to the diffuser ducts 76, 78 through the nozzles 104, 106. The nozzles 104, 106 accelerate the air from the high pressure compressor 15 and so eject a high velocity stream of air 102a, 102b into the diffuser ducts 76, 78.

The high velocity stream 102a, 102b in each diffuser duct 76, 78 then draws in a low velocity stream of air 98a, 98b from the low pressure compressor 14 through the respective inlets 96a, 96b.

The incoming streams 98, 102 are mixed along the length of the diffuser ducts 76, 78. Furthermore, the constrictions 90a, 90b and subsequent widening of the diffuser ducts 76, 78 towards the second end 72, causes a reduction in the velocity and an increase in pressure of the mixture due to the Venturi effect. The mixture of air streams 98, 102, is provided through the opening 108 at the second end 72 of the passage 68.

The air at the opening 108 is at lower pressure than the air from the high pressure compressor 15. However, the effect of the ejector 56 means that the air pressure is above the pressure of the air from the low pressure compressor 14. Thus, a small amount of air from a high pressure source can be used to provide pressurised air into the cabin 52.

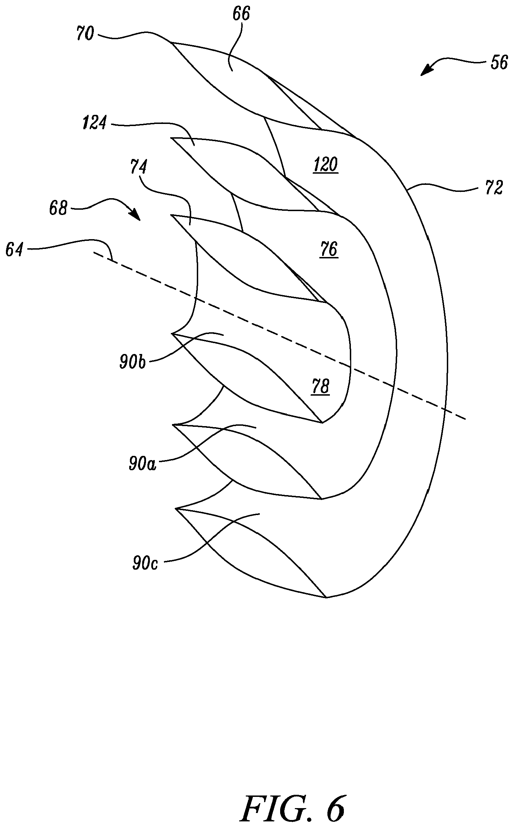

Figure 6 illustrates an alternative example of an ejector 56. In the example shown in Figure 6, the ejector 56 has three diffuser ducts 76, 78, 120. As in the example discussed in relation to Figures 5A and 5B, a cylindrical diffuser duct 78 is arranged within an annular diffuser duct 78. However, in this example, a further annular diffuser duct 120 is provided concentrically outside the first annular duct 76.

In the example shown in Figure 6, the outer wall 66 defines a passage 68, as discussed above. The passage 68 is split into three diffuser ducts 76, 78, 120 by Also, as discussed above, an inner wall 74 defines a first and second inner walls 74, 124. As in the example discussed above, the inner walls 74, 124 extend annularly around the ejector axis 64, and along the ejector axis 64, in order to split the passage 68 into the respective diffuser ducts 76, 78, 120.

A first inner wall 74 defines the cylindrical diffuser duct 78 along the centre of the passage 68. The first annular passage 76 is defined radially outside the first inner wall 74, between the first inner wall 74 and the second inner wall 124. The second annular passage 120 is defined radially outside the second inner wall 124, between the second inner wall 124 and the outer wall 66.

As such, the passages 76, 78, 120 are arranged concentrically and are contiguous.

At the first end 70 of the ejector 56, the walls 66, 74, 124 are flush. However, at the second end 72 of the ejector 56, the ends of the walls 66, 74, 124 are staggered, such that the innermost wall 74 (the first inner wall) extends the shortest distance along he axial direction 64, and the outer wall 66 extends the longest. As such, the end of the first inner wall 74 is within the second inner wall 124, and the end of the second inner wall 124, is within the outer wall 66.

The inner surface 92 of the outer wall 66 of the ejector 56 shown in Figure 6 tapers in from the first end 70 of the ejector 56 to a waist 80, and then outwards towards the second end 72, in a similar manner as described in relation to Figure 5A. In this example, the radial thickness of the wall 66 increases and reduces to form the waist 80, rather than the wall 66. It will be appreciated that the waist 80 can be formed in either manner.

Similarly, the radial spacing between the inner surface 82 and outer surface 84 of each inner wall 74,124increases and then decreases along the axial direction.

Therefore, each diffuser duct 76, 78, 120 includes a constriction 90a, 90b, 90c as discussed above. Furthermore, each diffuser duct 76, 78, 120 includes inlets in a similar manner to the ejector 56 discussed in relation to Figures 5A and 5B. Therefore, in use, the ejector 56 of Figure 6 works in a similar manner to the ejector 56 of Figures 5A and 5B.

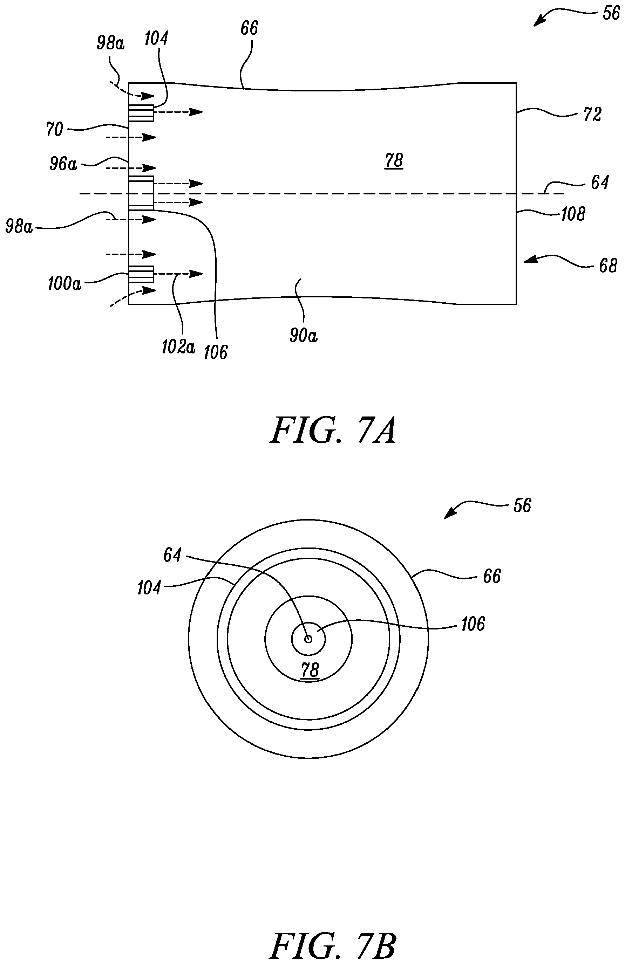

Figures 7A and 7B illustrate an example of an alternative embodiment of an ejector 56.

As in the example discussed above, the ejector 56 is formed by an outer wall 66 that is annular in cross section perpendicular to the ejector axis 64. The outer wall 66 extends along and around the ejector axis 64, defining a passage 68 extending from a first end 70 of the ejector 56 to a second end 72. The first end 70 of the passage 68 is closed by an end wall (not shown), including inlets for air, discussed below in more detail. The end wall may have any suitable structure or shape. The second end 72 of the passage 68 is open, forming an opening 108.

In this example, the ejector 56 has a single diffuser duct 78 that is cylindrical in cross section perpendicular to the axial direction 64. Thus, in this example, the passage 68 is not divided into separate diffuser ducts.

The diffuser duct 78 includes inlets 96a for a low pressure stream of gas 98a such as air from a low pressure compressor stage 14 of the engine 10. As discussed in the examples above, the inlets 96a are in the form of openings provided in the wall at the first end 70 of the ejector 56.

The diffuser duct 76 also includes a plurality of inlets 100a, 100b for a high pressure stream of gas 102a, 102b, such as air from a high pressure compressor stage 15 of the gas turbine engine 10.

A first inlet 100a is in the form of cylindrical nozzle 106 arranged at the centre of the end wall (i.e. on the axis). A second inlet 100b is formed by an annular nozzle 104 extending around the first end 70 of the ejector 56, and thus around the cylindrical nozzle 106. Thus, the ejector 56 of Figures 7A and 7B is similar to the ejector 56 of Figures 4A and 4B, with the inner wall 74 removed, so that the passage 68 forms a single duct 78.

As discussed in relation to Figures 5A and 5B, the diffuser duct 78 also includes a constriction 90 along its axial length, such that the diffuser duct 78 forms a Venturi tube. As discussed above, the constriction is formed by narrowing the passage 68, and then subsequently widening it, along the axial length from the first end 70 to the second end 72.

In use, the ejector 56 discussed in relation to Figures 7A and 7B works in a similar manner to the ejector 56 discussed in relation to Figures 5 and 6, using the high pressure gas to accelerate the low pressure gas.

From the example discussed above, it will be appreciated that the ejector may include any number of diffuser ducts 76, 78, 120. In one example, there may be a single annular diffuser duct 76, a single cylindrical diffuser duct 78, with a concentric arrangement of nozzles 104, 106.

In alternative examples, there may be two or more concentric, contiguous ducts 76, 78, 120. In some cases, a cylindrical duct 78 may be provided at the centre of the arrangement. However, in other cases, the ducts may all be annular, and the central space may be left as a void for other components.

The structure of the diffuser ducts 76, 78, 120 given above is by way of example only. Any suitable structure may be adopted.

In one example, the walls 66, 74, 124 may be supported by struts (not shown) extending radially through the passages 76, 78, 120, and may be mounted from the inner most wall 74, 124 to an axially extending support structure (not shown) or from the outer wall 66 to an external support structure. In other examples, the struts may be provided at one or both ends of the ejector 56.

Where ducts 76, 120 have been described as annular, it will be appreciated that this may include any suitable annular shape. For example, as shown in the Figures, the annular ducts 76, 120 may have a constant radial height around their circumference. However, in other examples, the annular ducts 76, 120 may have varying radial height around the circumference.

Although the ducts 76, 78, 120 shown are formed by walls that are circular in cross section, the walls may have any shape. For example the walls may be elliptical, square, rectangular, or any suitable shape.

In any of the above examples, the length of the passage 68, measured from the point along the axial direction 64 at which the high pressure stream (120a,b) is introduced into the low pressure stream (98a,b), to the second end 72 is at most six times the diameter of the passage 68 formed by the outer wall 66. Sufficient mixing of the gas streams can be achieved in this length. In some cases, the length may be at most four times the diameter of the passage 86.

For an annular diffuser duct 76, 120, the ratio of the length of the duct 76, 120 to the radial height may be 7:1. It will, however, be appreciated that the radial height of an annular duct 76, 120 is significantly less than the radius from the axis 64 to the outer wall of the annular duct, and so the length is significantly less than a cylindrical duct having the same outer diameter.

Where two or more ducts 76, 78, 120 are provided, it will be appreciated that addition of further ducts enables further reduction in the overall length, whilst achieving the same mixing.

Although in examples with multiple diffuser ducts 76, 78, 120 the ejector 56 has been described as a single ejector having multiple diffuser ducts 76, 78, 120 each with corresponding inlets, it will be appreciated that it may also be considered as an ejector system having multiple ejectors, arranged concentrically and contiguously. Each diffuser duct and the associated inlets form one of the ejectors.

In the examples with multiple diffuser ducts 76, 78, 120 discussed above, the ends of the diffuser ducts 76, 78, 120 are staggered such that the outer ducts 78, 120 extend further along the axial length. This is by way of example only, and the ducts 76, 78, 120 may be flush at both ends. In yet further examples, the ducts 76, 78, 120 may be staggered at the first end 70 of the ejector 56 instead of or as well as at the second end 72. In yet further examples, the ducts 76, 78, 120 may have different lengths, but the arrangement is not necessarily staggered from inner to outer.

The arrangement of the diffuser ducts 76, 78, 120, as Venturi tubes, with constrictions 90, is optional, and may be omitted. In some examples having multiple diffuser ducts 76, 78, 120, some but not all of the ducts may be arranged as Venturi tubes.

Where ducts 76, 78, 120 are arranged with constrictions 90, this may be achieved in any suitable manner. For example, the walls may thicken or taper as discussed above, or inserts may be provided to form the constrictions 90. Furthermore, although the constrictions 90 in the examples discussed above are all aligned at the same position along the axis 90, this need not necessarily be the case, and the constrictions 90 may be at different lengths.

In one example, the high pressure source may take air from the engine 10 at 75psi (-0.6MPa) and the low pressure source may take air from the engine 10 at 25psi (-0.15MPa). However, it will be appreciated that air may be taken at any suitable pressure.

It will also be appreciated that the inlets for air from the low and high pressure sources may be arranged in any suitable manner.

For example, any suitable nozzle may be used for the air from the high pressure source. Rather than using an annular nozzle in the annular diffuser ducts 76, 78, 120, a set of cylindrical nozzles may be used, or several nozzles formed in partial arcs. Furthermore, where a number of concentric diffuser ducts 76, 78, 120 are provided, including a central cylindrical duct 78, the nozzle in the central duct 78 may be an annular nozzle.

In examples with a single cylindrical diffuser duct 78, as discussed in relation to Figures 7A and 7B, it will be appreciated that further annular nozzles 104 may be formed at the first end 70 of the ejector 56. The further nozzles may be concentric with the cylindrical nozzle 106 and first annular nozzle 104. In some examples, the cylindrical nozzle 106 may be omitted, and multiple annular nozzles may be provided in a concentric pattern.

In further examples where a number of concentric diffuser ducts 76, 78, 120 are provided, one or more of the ducts 76, 78, 120 may have an annular arrangement of nozzles, as discussed in relation to Figures 7A and 7B. In one example, the central cylindrical diffuser duct 78 may be arranged in the same manner as the diffuser duct 78 in Figures 7A and 7B, with further annular ducts arranged outside it.

The inlets 96 for the air from the low pressure source may also be arranged in any suitable manner. For example, the inlets may be formed in the outer wall 66 or inner wall 74, 124, rather than an end wall.

In use, the cabin bleed ejector 56 may be provided within the engine core 11, or at any other suitable position in the engine 10.

The ejector 56 may also be used in any situations other than providing pressurised cabin air in an aircraft, and may be used for mixing any gasses or fluids.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A fluid ejector (56) having:
a diffuser duct (76) for mixing of a first gas stream (98a) with a second gas stream (102a) having faster velocity than the first gas stream (98a), wherein the diffuser duct (76) extends along an axial direction (64); and wherein, in cross-section perpendicular to the axial direction (64), the diffuser duct (76) is defined between a first wall (124) extending around the axial direction (64), and a second wall (74) extending around the axial direction (64), radially within the first wall (124).

2. The fluid ejector (56) of claim 1, wherein the diffuser duct is a first diffuser duct (76), and wherein the fluid ejector (56) includes:
a second diffuser duct (78,120) extending along the axial direction (64) and extending within the second wall (74) or outside the first wall (124),
wherein the second diffuser duct (78, 120) is for mixing a third gas stream (98b) and a fourth gas stream (102b), the third gas stream (98b) from the same source as the first gas stream (98a) and the fourth gas stream (102b) from the same source as the second gas stream (102a).

3. The fluid ejector (56) of claim 2, wherein in cross-section perpendicular to the axial direction (64), the second diffuser duct (78) is comprise a continuous space bounded the second wall (74).

4. The fluid ejector (56) of claim 2, wherein in cross-section perpendicular to the axial direction (64), the second diffuser duct (120) is defined between a perimeter wall (66) extending around the axial direction (64) and the first wall (124), wherein the first wall (124) is radially within the perimeter wall (66).

5. The fluid ejector of any of claims 2 to 4, wherein the first and second diffuser ducts (76, 78, 120) are contiguous in the radial direction (64), such that first wall (124) forms an inner surface or outer surface of the second diffuser duct (76, 78,120).

6. The fluid ejector of any of claims 2 to 5, including one or more further diffuser ducts (76, 78, 120), each further diffuser duct (76, 78, 120) extending along the axial direction (64) and arranged radially inside or outside the first and second diffuser ducts (76, 78,120), each further diffuser duct (76, 78, 120) for mixing a gas stream from the same source as the first gas stream (98a) and a gas stream from the same source as the second gas stream (102a).

7. The fluid ejector (56) of any of claims 2 to 6, wherein the ejector comprises a passage (68) divided into two or more diffuser ducts (76, 78, 120) in a radial direction, and wherein a ratio between the length of the passage (68) along the axial direction (64), and a diameter of the passage (68) in the radial direction is no more than 6:1 or no more than 4.5:1.

8. The fluid ejector (56) of any preceding claim,
wherein the or each diffuser duct (76, 78, 120)extends from a first end (70) to a second end (72), along the axial direction; wherein the first and second gas streams (98, 102) are provided at or near the first end (70), and travel along the axial direction (64) such that a mixture of the first and second gas streams (98, 102) is provided at the second end (72) of the or each duct (76, 78, 120); and
wherein a radial width (88, 94) of the diffuser duct (78), or at least one of the diffuser ducts (76, 78, 120), decreases along the axial length from the first end (70) to a constriction (90), and widens along the axial length from the constriction (90) to the second end (72), such that the diffuser duct (76) or the at least one of the or each diffuser ducts (76, 78, 120) forms a Venturi tube.

9. The fluid ejector (56) of any preceding claim, wherein the or each diffuser duct (76, 78, 120) includes one or more inlets (96a,b) for the first gas stream (98), and one or more inlets (100a,b) for the second gas stream (102a,b) and optionally or preferably wherein either:
(a) the one or more inlets (100a,b) for the second gas stream (102) comprises one or more separate nozzles (104, 106) arranged around the or each diffuser duct (76, 78, 120), at or near the first end (70); or
(b) the one or more inlets (100a,b) for the second gas stream (102) comprises an annular nozzle (104) provided at or near the first end (70) of the or each diffuser duct (76).

10. The fluid ejector (56) of any preceding claim, wherein the fluid ejector (56) comprises a cabin bleed ejector for providing air from a compressor stage (14, 15) of a gas turbine engine (10) of an aircraft (54) to a passenger cabin (52) of the aircraft (54) and optionally or preferably wherein the fluid ejector (65) is arranged to take a first gas stream of air (98) from a first compressor stage (14) of a gas turbine engine (10), and the second stream of air (102) from a second compressor stage (15), the second compressor stage (156) operating at higher pressure than the first compressor stage.

11. A gas turbine engine (10) for an aircraft comprising:
an engine core (11) comprising a turbine (19), a compressor (14), and a core shaft (26) connecting the turbine to the compressor (14);
a fan (23) located upstream of the engine core (11), the fan (23) comprising a plurality of fan blades; and
a fluid ejector (56) of claim 13 or claim 14, arranged to provide air form the compressor (14) to a cabin of an aircraft (54) on which the engine (10) is mounted.

12. The gas turbine engine (10) of claim 11, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor;
the second turbine (17), second compressor (15), and second core shaft (27) are arranged to rotate at a higher rotational speed than the first core shaft (26); and
the first gas stream of the fluid ejector (56) is taken from the first compressor (14) or the second compressor (15), and the second
gas stream is taken from the second compressor (15),
and additionally or alternatively wherein the gas turbine engine includes a gearbox (30) that receives an input from the core shaft (26) and outputs drive to the fan (23) so as to drive the fan at a lower rotational speed than the core shaft (26).

13. A fluid ejector (56) having:
a passage (68) extending along an axial direction (64) from a first end (70) to a second end (72), opposite the first (70), the diffuser duct (78) arranged to mix a first gas stream (98a) with a second gas stream (102a) having faster velocity than the first gas stream (98a), and provide the mixture at the second end (72);
one or more inlets (96a) for the first gas stream (98a) at the first end of the diffuser duct (78); and
a nozzle arrangement for providing the second gas stream (98b) at the second end of the diffuser duct (78),
wherein the nozzle arrangement includes a plurality of nozzles (104, 106) arranged concentrically around the axial direction (64).

14. The fluid ejector (56) of claim 13, wherein the nozzle arrangement includes:
a cylindrical nozzle (106) arranged along the axial direction; and
an annular nozzle or arrangement of nozzles (104) arranged around the cylindrical nozzle (106).

15. The fluid ejector (56) of claim 13 or claim 14, wherein:
the passage (68) includes an inner wall (74) extending within the passage (68);
the inner wall (74) is annular around the axial direction (64) such that the passage (68) is split into a cylindrical duct (78), and an annular duct (76) around the cylindrical duct (78); and
the nozzle arrangement is arranged to provide the second gas stream (98b) into the cylindrical duct (78) and the annular duct (76).
